# EUROPÄISCHE PATENTANMELDUNG

(11) **EP 2 662 535 A1**
(43) Veröffentlichungstag der Anmeldung: **13.11.2013**
(21) Anmeldenummer: 12166935.2
(22) Anmeldetag: 07.05.2012
(51) Int. Cl.: F01D 15/12, F02C 3/113, F16H 37/04

(54) **Rotor für eine Dampfturbine und zugehörige Dampfturbine**

(71) Anmelder: Siemens Aktiengesellschaft, 80333 München (DE)
(72) Erfinder: Devries, Jörg, 46487 Wesel (DE)

(57) **Zusammenfassung**

Die Erfindung betrifft einen Rotor (3) für eine Strömungsmaschine, wobei der Rotor (3) ein Planetengetriebe (1) umfasst, an dem Niederdruckendstufenschaufeln (17) angeordnet sind, wobei das Planetengetriebe (1) derart ausgebildet ist, dass die Frequenz der Laufschaufeln (17) geringer ist als die Frequenz des Rotors (3). Und eine zugehörige Dampfturbine.

## Beschreibung

Die Erfindung betrifft einen Rotor für eine Strömungsmaschine.

Des Weiteren betrifft die Erfindung eine Dampfturbine.

Dampfturbinen, die in der kommunalen Energieversorgung eingesetzt werden und als Ausführungsform einer Strömungsmaschine betrachtet werden können, sind vergleichsweise groß dimensioniert und weisen daher ein entsprechend hohes Gewicht auf. Die Gewichte solcher Dampfturbinen können bei weit über 100 Tonnen liegen. Im Wesentlichen umfasst eine Dampfturbine ein drehbar gelagertes Bauteil, das auch als Welle bezeichnet wird. Diese Welle umfasst Laufschaufeln, die fest an der Wellenoberfläche angeordnet sind. Solch eine Welle ist innerhalb eines Gehäuses drehbar gelagert, wobei das Gehäuse Leitschaufeln umfasst, die zusammen mit einer Laufschaufel eine Turbinenstufe darstellen.

Im Betrieb rotiert die Welle einer Dampfturbine vorzugsweise mit 50Hz bzw. mit 60 Hz. Solch hohe Umdrehungsfrequenzen führen zu enormen Fliehkräften an den Laufschaufeln. Insbesondere sind die Endstufen einer Niederdruckdampfturbine entsprechend groß und erfahren dadurch eine besonders hohe Fliehkraft.

Technisch bedingt werden die Wellen der Dampfturbinen mit einer konstanten Drehzahl betrieben. Um dennoch vergleichsweise große Endstufen bauen zu können, werden Materialien eingesetzt, die eine geringere Dichte aufweisen und dadurch geringere Fliehkräfte erfahren. Solch ein Material ist beispielsweise Titan, das in manchen Endstufen eingesetzt wird. Andere Lösungen könnten möglich sein, indem die feste Drehfrequenz verringert wird, wie z.B. eine halbtourige Drehfrequenz. Ebenso wäre es möglich, die Drehfrequenz durch Getriebemaschinen zu verringern.

Es ist Aufgabe der Erfindung, eine Welle für eine Strömungsmaschine anzugeben, die für vergleichsweise hohe Frequenzen geeignet ist.

Gelöst wird diese Aufgabe durch einen Rotor für eine Strömungsmaschine, mit einem Planetengetriebe umfassend einem um den Rotor angeordnetes Hohlrad, das drehfest angeordnet ist, wobei das Hohlrad innenliegende Zähne aufweist, die mit mehreren innenliegenden Planeten-Zahnrädern zusammenwirken, einer Planetenscheibe, die um die Welle angeordnet ist und an der die Planetenräder drehbar angeordnet sind, wobei die Welle ein Sonnenzahnrad aufweist, das mit den Planeten-Zahnräder zusammenwirkt und einer Radscheibe mit Laufschaufeln, die an der Planetenscheibe angeordnet sind.

Somit wird der Weg eingeschlagen, die Frequenz der Welle nicht zu ändern, sondern insbesondere die Endstufe umfassend der Laufschaufeln auf der Welle. Dazu wird ein Planetengetriebe berücksichtigt, das den Vorteil bietet, dass die Frequenz der Welle auf die Frequenz der Planetenscheibe, an dem die Laufschaufeln angeordnet sind, verringert wird. Dadurch sind die Fliehkräfte an den Laufschaufeln der Endstufe wesentlich geringer. Die Folge ist, dass anstatt des beispielhaft aufgeführten Materials Titan ein anderes Material verwendet werden kann, das zwar eine höhere Masse aufweist, aber dafür eine größere Festigkeit wie z.B. Stahl.

Infolge der geringeren Frequenz an der Endstufe kann diese entsprechend der physikalisch begrenzenden Fliehkraft nun mit vergrößerten Querschnitten ausgeführt werden. Durch die Wahl von Werkstoffen geringer Dichte kann der abströmende Querschnitt wie bisher auch in Lösungen ohne Planetengetriebe weiter vergrößert werden.

Vorteilhafte Weiterbildungen sind in den Unteransprüchen angegeben.

So wird in einer ersten vorteilhaften Weiterbildung das Planetengetriebe gegenüber der Welle abgedichtet. Erfindungsgemäß geschieht dies durch eine Öldichtung zwischen der Welle und der Planetenscheibe bzw. der Radscheibe. Ebenso ist in einer alternativen Ausführungsform der Erfindung eine Dampfdichtung zwischen der Welle und der Planetenscheibe möglich. Der im Betrieb strömende Dampf sollte möglichst ohne Verluste und lediglich durch den Strömungskanal strömen. Somit sollten alle möglichen Leckagen zwischen den drehenden und den feststehenden Bauteilen vermieden werden.

In einer vorteilhaften Weiterbildung weist das Planetengetriebe mindesten vier Planeten-Zahnräder auf. Dies führt zu einer erhöhten Stabilität der Welle und führt zu einer geringeren Ausfallmöglichkeit des Planetengetriebes.

Erfindungsgemäß ist die Welle für einflutige als auch für zweiflutige Dampfturbinen einsetzbar. Die Erfindung wird anhand des nachfolgenden Ausführungsbeispieles nun näher erläutert. Es zeigen:
- Figur 1: ein Planetengetriebe für eine Welle;
- Figur 2: den Querschnitt einer Dampfturbine mit einer erfindungsgemäßen Endstufe.

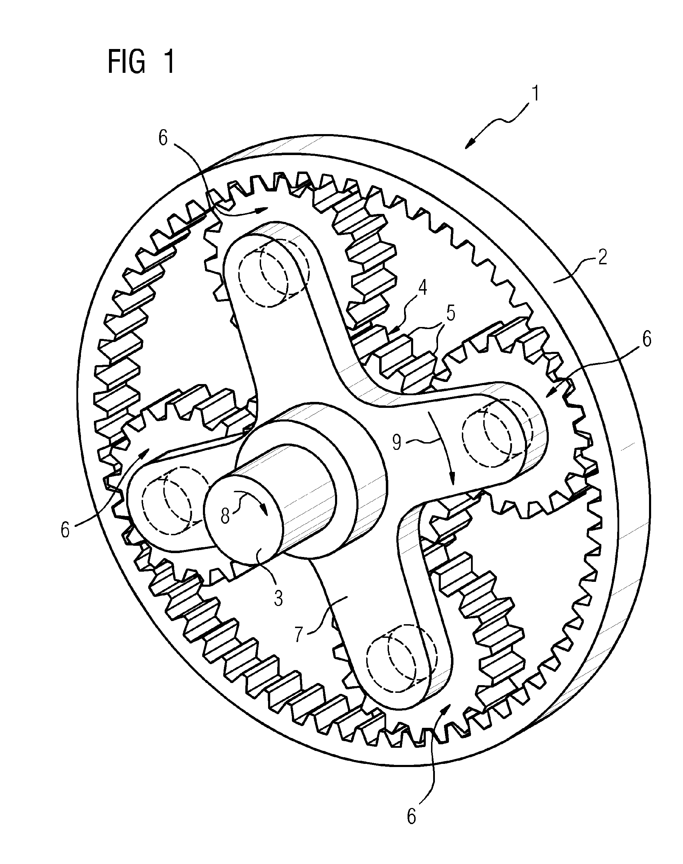

Die Figur 1 zeigt ein Planetengetriebe 1, das aus mehreren einzelnen Bauteilen besteht. Das Planetengetriebe 1 umfasst ein Hohlrad 2, das innenseitig Zähne aufweist. Dieses Hohlrad 2 weist einen größeren Durchmesser als der Durchmesser einer Welle 3 auf. Die Welle 3 weist ein Sonnenrad 4 auf, das am äußeren Umfang Zähne 5 aufweist. In der Figur 1 sind aus Gründen der Übersichtlichkeit lediglich zwei Zähne mit dem Bezugszeichen 5 versehen. Die Zähne 5 des Sonnenzahnrades 4 greifen in entsprechende Zähne eines Planeten-Zahnrades 6 ein. Die Planeten-Zahnräder 6, das Hohlrad 2 und das Sonnenzahnrad 4 sind somit in einer Ebene angeordnet.

Die Planeten-Zahnräder 6 werden über eine Planetenscheibe 7 gehalten und zwar in der Weise, dass die Planeten-Zahnräder 6 drehbar auf der Planetenscheibe 7 angeordnet sind. Das Hohlrad 2 wird drehfest angeordnet.

Somit wird eine Drehung 8 der Welle 3 auf das Sonnenzahnrad 4 zum Planeten-Zahnrad 6 übertragen. Somit rotiert das Planeten-Zahnrad 6 um eine Rotationsachse. Die Folge ist, dass die Planetenscheibe 7 infolge des Eingreifens des Planeten-Zahnrades 6 in das Zahnrad des Hohlrades 2 in Bewegung gesetzt wird. Die Planetenscheibe 7 rotiert daher ebenfalls und führt eine Drehung 9 durch. Durch die geeignete Wahl der Durchmesser des Hohlrades 2 und der Planeten-Zahnräder 6 ist es möglich, die Frequenz der Planetenscheibe 7 deutlich gegenüber der Frequenz der Welle 3 zu verringern. An die Planetenscheibe 7 wird über eine nicht dargestellte kraftschlüssige Verbindung eine Radscheibe 16 angeordnet. An die Radscheibe 16 sind Laufschaufeln 17 angeordnet (in Figur 1 nicht dargestellt).

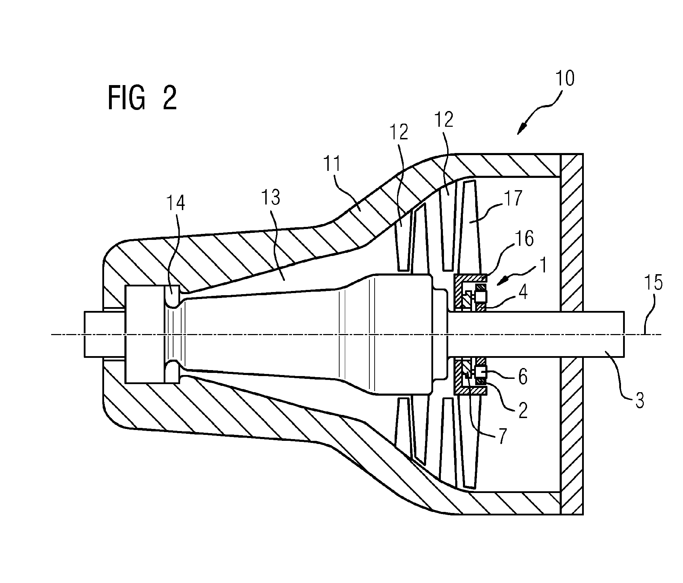

Die Figur 2 zeigt die Anordnung des Planetengetriebes 1 in einer Strömungsmaschine 10. Die als Dampfturbine ausgeführte Strömungsmaschine 10 weist ein Gehäuse 11 auf, an dem innenseitig Leitschaufeln 12 angeordnet sind. In der Figur 2 sind lediglich zwei Leitschaufeln mit dem Bezugszeichen 12 versehen. Die übrigen Leitschaufeln sind aus Gründen der Übersichtlichkeit nicht dargestellt. Zwischen der Welle 3 und dem Gehäuse 11 bildet sich ein Strömungskanal 13 aus, der durch verschiedene Leit- und Laufschaufeln (nicht dargestellt) gebildet ist. Durch diesen Strömungskanal 13 strömt ein Dampf, der über eine Einlassöffnung 14 in die Dampfturbine strömt. Die Welle 3 rotiert um eine Rotationsachse 15. Diese Frequenz ist nahezu konstant. Über das Planetengetriebe 1 rotiert die Planetenscheibe 7 mit einer geringeren Frequenz. An die Planetenscheibe 7 ist eine Radscheibe 16 mit Laufschaufeln 17 einer Endstufe angeordnet. Auf diese Laufschaufeln 17 herrscht nun eine geringere Fliehkraft, als wenn die Laufschaufeln 17 direkt auf der Wellenoberfläche angeordnet wären.

Die in Figur 2 dargestellte Dampfturbine ist eine einflutige Dampfturbine. Das bedeutet, dass der Dampf, der über die Einströmöffnung 14 in den Strömungskanal 13 gelangt, lediglich in eine Richtung strömt. Die Erfindung ist genauso anwendbar für zweiflutige Dampfturbinen. Das bedeutet, dass der Dampf über eine Einströmöffnung in eine Dampfturbine gelangt und von dort in jeweils eine Flut, die um 180° verschiedene Strömungsrichtungen zeigt, weiterströmt. In solchen zweiflutigen Dampfturbinen können zwei Planetengetriebe 1 eingesetzt werden, um die Endstufen jeweils erfindungsgemäß auszubilden. Das bedeutet, dass die Frequenz der Endstufen der zweiflutigen Dampfturbine derart ausgebildet ist, dass gegenüber gleicher Endstufen ohne Planetengetriebe die Fliehkräfte geringer sind infolge der geringeren Frequenz.

## Patentansprüche

1. Rotor für eine Strömungsmaschine (10) mit einem Planetengetriebe (1) umfassend eine Welle (3) und einen um die Welle (3) angeordnetes Hohlrad (2), das drehfest anordenbar ist,
wobei das Hohlrad (2) innenliegende Zähne aufweist, die mit mehreren innenliegenden Planeten-Zahnrädern (6) zusammenwirken,
einer Planetenscheibe (7), die um die Welle (3) angeordnet ist und an der die Planeten-Zahnräder (6) drehbar angeordnet sind,
wobei die Welle (3) ein Sonnenzahnrad (4) aufweist, das mit den Planeten-Zahnrädern (6) zusammenwirkt und Laufschaufeln (17), die an der Planetenscheibe (7) angeordnet sind.

2. Rotor nach Anspruch 1,
wobei die Planentenscheibe (7) gegenüber der Welle (3) abgedichtet ist.

3. Rotor nach Anspruch 2,
wobei eine Öldichtung zwischen Welle (3) und Planetenscheibe (7) angeordnet ist.

4. Rotor nach Anspruch 2,
wobei eine Dampfdichtung zwischen Welle (3) und Planetenscheiben (7) angeordnet ist.

5. Rotor nach einem der vorhergehenden Ansprüche,
wobei mindestens vier Planeten-Zahnräder (6) angeordnet sind.

6. Rotor nach einem der vorhergehenden Ansprüche,
wobei die Planeten-Zahnräder (6), das Sonnenzahnrad (4) und das Hohlrad (2) derart dimensioniert sind, dass eine Wellen-Drehfrequenz der Welle höher ist als die Planetenscheiben-Drehfrequenz des Planetenscheibe (7).

7. Rotor nach einem der vorhergehenden Ansprüche,
wobei die Planetenscheibe (7) mit einer Radscheibe (16) verbunden ist.

8. Rotor nach Anspruch 7,
wobei die Laufschaufeln (17) an der Radscheibe (16) angeordnet sind.

9. Dampfturbine mit einem Rotor gemäß einem der Ansprüche 1 bis 8.

10. Dampfturbine nach Anspruch 9,
wobei die Dampfturbine zweiflutig ausgebildet ist und jede Flut ein Planetengetriebe (1) gemäß einem der Ansprüche 1 bis 8 aufweist.
